(19) Europäisches Patentamt
European Patent Office
Office européen des brevets

(11) **EP 2 411 649 B1**

(12) **EUROPEAN PATENT SPECIFICATION**

(45) Date of publication and mention
of the grant of the patent:
**22.02.2017 Bulletin 2017/08**

(51) Int Cl.:
**F02D 41/14** *(2006.01)*   **G01M 15/12** *(2006.01)*

(21) Application number: **10713476.9**

(22) Date of filing: **18.03.2010**

(86) International application number:
**PCT/FI2010/050213**

(87) International publication number:
**WO 2010/109062 (30.09.2010 Gazette 2010/39)**

(54) **MONITORING OF A COUPLING IN A ROTATING SYSTEM OF AN INTERNAL COMBUSTION ENGINE**

ÜBERWACHUNG EINER KOPPLUNG IN EINEM ROTIERENDEN SYSTEM EINER BRENNKRAFTMASCHINE

SOURVEILLANCE D'UN ACCOUPLEMENT DANS UN SYSTÈME ROTATIF D'UN MOTEUR À COMBUSTION INTERNE

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **27.03.2009 FI 20095322**

(43) Date of publication of application:
**01.02.2012 Bulletin 2012/05**

(73) Proprietor: **Wärtsilä Finland Oy**
**65380 Vaasa (FI)**

(72) Inventor: **ÖSTMAN, Fredrik**
**FI-65100 Vaasa (FI)**

(74) Representative: **Berggren Oy, Helsinki & Oulu**
**P.O. Box 16**
**Eteläinen Rautatiekatu 10A**
**00101 Helsinki (FI)**

(56) References cited:
**WO-A1-2005/036121**   **WO-A1-2006/045181**
**DE-A1- 10 119 209**   **US-A1- 2008 040 021**

**Description**

*Technical Field*

The invention relates to the dynamics of the rotating system of an internal combustion engine and especially to the dynamics of a coupling in the rotating system of the internal combustion engine.

*Background Art*

Rotating system refers to a system wherein rotation movement generated by an internal combustion engine is forwarded via a crankshaft and an interconnecting coupling. Rotating system comprises, for example, a crankshaft of the internal combustion engine, flexible coupling, rotor, propeller shaft, gears, etc.

The dynamics of the rotating system have a direct impact on the engine performance. The torsional characteristics of the rotating systems have, moreover, a direct impact on the performance of the speed controller and associated filters.

To maintain a constant engine speed, appropriate controller parameters needs to be manually determined in order to achieve the required behaviour for transient and steady-state load conditions. Suitable speed-filter parameters have to be determined in order to dynamically decouple the engine from the load, in order to prevent the speed controller to interact with both the resonance frequency of the flexible coupling and the dynamic link between multiple generator sets.

Nominal values for controller and filter parameters can be determined but need typically to be manually retuned on site due to achieve optimal performance.

Many methods for automatic detection of misfire and cylinder balancing, uses reconstruction of the gas torque from measurements of the crankshaft angular speed. For medium-speed engines it is, in addition, usually necessary to consider the dynamics of the flexible coupling. The nominal values for the dynamic properties of the flexible coupling are typically given by the manufacturer but are approximate.

To avoid excessive wear of mechanical components, it is important for safety reasons to monitor the vibrator behaviour of the crankshaft of low and medium-speed engines. Monitoring of the flexible coupling is usually done either by measuring the vibratory behaviour of one of two locations of the rotations system. By continuously monitoring, for example, the twist of the coupling and ensuring that the amplitudes do not exceed certain limits, the condition is ensured.

US 2008/0040021 discloses a traditional way of monitoring a coupling.

However, this approach only serves as means for avoiding excessive load situations and does not provide any information about the actual health of the coupling. It is hence possible that due to priori heavy overloading, the natural frequency of the coupling has changed significantly, such that it has moved close to one of the torque orders excited by the fuel combustions. Since these lower torque order amplitudes are a function of the relative output effect of the cylinders and may be temporarily low, the hazardous situation is undetectable by monitoring the current twist of the coupling.

*Disclosure of Invention*

Object of invention is to monitor the key dynamic parameters of a coupling in a rotating system of internal combustion engine.

In an exemplary embodiment of the invention there is a method which is able to determine the key dynamic parameters of a coupling in a rotating system of internal combustion engine.

In another exemplary embodiment of the invention there is a system which is able to determine the key dynamic parameters of a coupling in a rotating system of internal combustion engine.

In another exemplary embodiment of the invention there is a device which is able to determine the key dynamic parameters of a coupling in a rotating system of internal combustion engine.

A monitored coupling can be one or several connected rotating components with dynamic properties relevant to the system. Component can be, for example, flexible coupling, rotor, shaft, gears, etc.

Dynamic parameters, such as stiffness and viscous damping of the coupling is estimated by measuring the angular speed on both sides of the coupling and using adjustments of the cylinder-wise injected fuel amounts, Adjustments of the injected fuel amounts are used for exciting the torsional vibration dynamics, i.e. the behaviour of the coupling, during different fuel-injection set-points, is monitored through the angular speed measurements. The stiffness and damping of the coupling can then be estimated and monitored.

Dynamic parameters, stiffness and viscous damping, can be identified by means of offset changes in the injected fuel amounts. The amount of change in fuel amount can be kept relatively small. The dynamics can be excited with a fuel amount change of 2 - 20 %, more advantageous 4 - 12 % and most advantageous 5 - 10%. By using relative small adjustments of the injected fuel amounts, the effect on the rest of the systems is limited.

The advantage of using cylinder-wise fuel-injection adjustment is that monitoring is achieved by effecting only to a part in the engine system.

Monitoring can also be executed without any significant effect on system output, because the change in the fuel-injection in one cylinder can be compensated with a relative change in fuel-injection into one or more other cylinders.

Therefore the system is affected in such way and by such amount that monitoring of the invention can be provided as online application which can be used during normal operation, also in low load situations.

### *Brief Description of Drawings*

The present invention will now be described by way of example with reference to the accompanying drawing, in which:

Fig. 1 illustrates an example of an engine system model as a two-mass lumped model;
Fig. 2 shows the phase-angle diagrams for order 1/2, 1 and 3/2 are depicted for a exemplary six-cylinder engine;
Fig. 3 shows the measured gas torque and its three lowest torque orders;
Fig. 4 illustrates engine system model of a six-cylinder inline engine and a generator connected to an infinite bus;
Fig. 5. shows identified phase-angle diagrams for orders 1/2, 1 and 3/2 for a six-cylinder engine of figure 4;
Fig. 6. shows estimated phase-angle diagrams for order ½;
Fig. 7. shows estimated stiffness of the flexible coupling;
Fig. 8. shows estimated phase-angle diagrams for orders 1/2 and 1;
Fig. 9 shows development of the estimated values of damping;
Fig. 10. shows identified phase-angle diagrams of tested six-cylinder engine for orders ½;
Fig. 11A. shows estimated phase-angle diagrams for order 1/2 at 20 % engine load;
Fig. 11B. shows estimated phase-angle diagrams for order 1/2 at 50 % engine load;
Fig. 12. shows estimated phase-angle diagrams for orders ½ and 1;
Fig. 13. shows estimation results of the stiffness and damping of a flexible coupling on a engine;
Fig. 14 shows one embodiment of a monitoring system for monitoring dynamic properties in a rotating system of an internal combustion engine;
Fig. 15 discloses example measuring results received from flywheel and from rotor; and
Fig. 16 is a flowchart disclosing example of monitoring method.

### Detailed description

Discussion of the present invention will now be described more fully hereinafter with reference to the accompanying drawings, in which some, but not all embodiments of the invention are shown. Indeed, the invention may be embodied in many different forms and should not be construed as limited to the embodiments set forth herein; rather, these embodiments are provided so that this disclosure will satisfy applicable legal requirements.

### Fundamental dynamics of internal combustion engine

In this section the fundamental dynamics of internal combustion engine is described. The identification of modal parameters of the crankshaft of internal combustion engines is, in addition, presented.

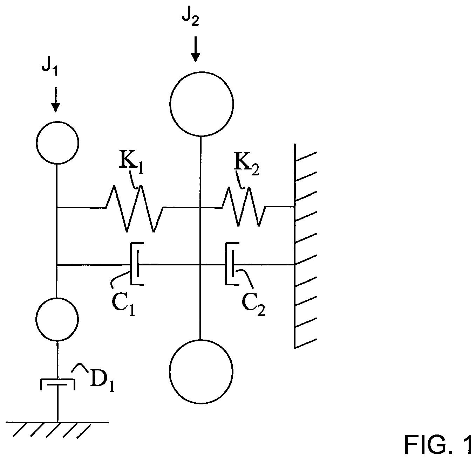

Reference is made to Figure 1 for illustrating *engine system* as a two-mass lumped model. The main dynamic behaviour of engine system, for example large medium-speed engine-generator sets, can in general be represented by as a two-mass lumped model of figure 1. Here $J_1$ and $J_2$ denote the inertias of the engine and generator, respectively, $K_1$ and $K_2$ are the stiffness between the engine and load and the load and grid, $C_1$ and $C_2$ are the viscous damping between the engine and rotor and the rotor and grid, and $D_1$ is the friction of the engine.

The vibratory system in Fig. 1 can be expressed as

$$J_1(\varphi_1)\ddot{\varphi}_1 + \frac{1}{2}\frac{dJ_1(\varphi_1)}{d\varphi_1}\dot{\varphi}_1^2 + D_1\dot{\varphi}_1 + C_1(\dot{\varphi}_1 - \dot{\varphi}_2) + K_1(\varphi_1 - \varphi_2) = M_G(t), \qquad (1)$$

$$J_2\ddot{\varphi}_2 + C_2\dot{\varphi}_2 + K_2\varphi_2 - C_1(\dot{\varphi}_1 - \dot{\varphi}_2) - K_1(\varphi_1 - \varphi_2) = M_L(t), \qquad (2)$$

where $\varphi_1(t)$ and $\varphi_2(t)$ denote the angular positions of the flywheel and the load, respectively, $\dot{\varphi}_1$ and $\dot{\varphi}_2$ their angular

speeds and $\ddot{\varphi}_1$ and $\ddot{\varphi}_2$ their angular accelerations, $M_L(t)$ is the external load torque affecting the load side of the flexible coupling, and $M_G(t)$ is the gas torque, which depends on the fuel injections. Note that viscous damping can be expressed as function of the stiffness as

$$C = \frac{\kappa K}{\omega_n}, \qquad (3)$$

where $\omega_n$ is the resonant frequency and $\kappa$ is the relative damping coefficient.

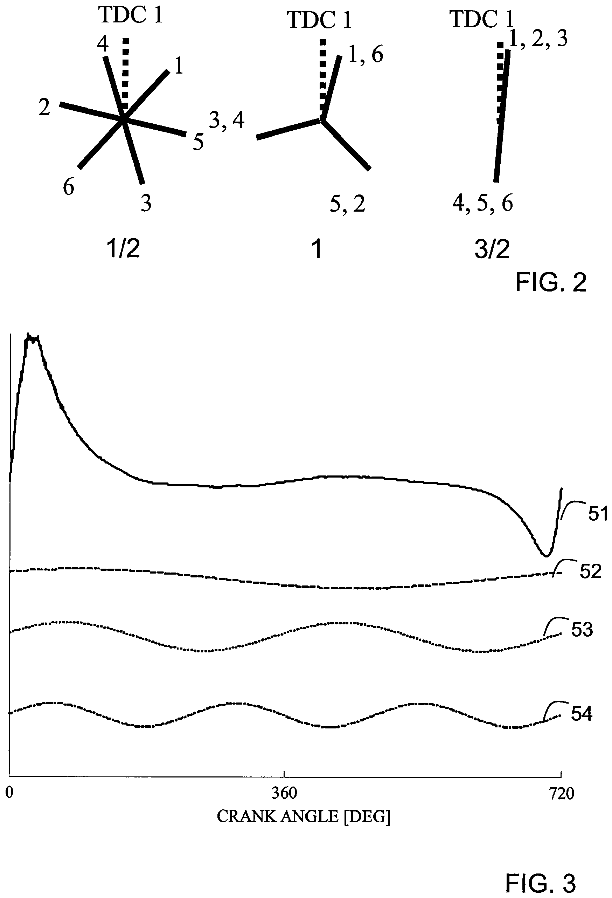

In Fig. 2 the phase-angle diagrams for order 1/2, 1 and 3/2 are depicted for a six-cylinder engine. For internal combustion engines, the $N_{cyl}/2$ lowest frequencies needs to be analysed, where $N_{cyl}$ is the number of cylinders, in order to determine the cylinder-wise torque contributions.

This can be done in the frequency-domain by means of the engine- and order-specific phase-angle diagrams of the engine. In Fig. 2 the phase-angle diagrams for order 1/2, 1 and 3/2 are depicted for a six-cylinder engine with firing order 1-5-3-6-2-4. Note that the phase-angle diagrams are rotated with respect to the top-dead-centres (TDC) of the cylinders.

For internal combustion engines, the rotational behaviour of the masses are composed of a discrete set of frequencies and for a four-stroke engine the set of angular frequencies involved are $\omega_p = 2\pi f p$, $p = 0, 1/2, 1, 3/2, ...$, where $f$ is the rotational frequency. The number $p$ is commonly also called the frequency order. As can be seen in Fig. 2, each order has a specific phase $\phi_p$ with respect to TDC of the cylinder.

In Figure 3, the measured gas torque 51 and its three lowest torque orders 52, 53, 54 are depicted, where Crank Angle 0 degree corresponds to the TDC of the cylinder. Reference number 52 denotes to torque order ½, 53 denotes to torque order 1 and 54 denotes to torque order 1½. The phase $\phi_p$ is to some extent influenced by the ignition timing and the current load of the cylinder. However, in context of cylinder balancing $\phi_p$ can be assumed constant.

The intension is now to use the engine model and measurements of the angular speeds of the flywheel and load-side of the flexible coupling to reconstruct the superposed oscillating torque applied on the flywheel. Through exciting the system dynamics by adjusting the cylinder-wise fuel-injection durations and analysis of the superposed oscillating torque, the engine-specific phase-angle diagrams of the considered set of orders can be identified. By furthermore using knowledge about $\phi_p$ of the lowest torque orders, the dynamics of the flexible coupling and, in addition, be identified.

**Parameter estimation**

The model of the crankshaft system (Fig. 1) can be rewritten for a given frequency $\omega_p$ of $M$ in terms of its sine and cosine components as

$$M(\omega_p t) + M_M(\omega_p t) = \left[ -J_1 \omega_p^2 \Phi_{1,\cos} + C_1 \omega_p (\Phi_{1,\sin} - \Phi_{2,\sin}) + K_1 (\Phi_{1,\cos} - \Phi_{2,\cos}) \right] \cdot \cos(\omega_p t) +$$
$$\left[ -J_1 \omega_p^2 \Phi_{1,\sin} + C_1 \omega_p (-\Phi_{1,\cos} + \Phi_{2,\cos}) + K_1 (\Phi_{1,\sin} - \Phi_{2,\sin}) \right] \cdot \sin(\omega_p t),$$
$$(4)$$

where $\Phi_1$ and $\Phi_2$ are the Fourier series of $\varphi_1$ and $\varphi_2$, respectively.

The mass torque $M_M = (1/2)(dJ(\varphi_1)/d\varphi_1) \cdot \dot{\varphi}_1^2$ which is a result of the oscillating masses of the crank mechanism and pistons is known and can be compensated. For simplicity, the mass torque will be omitted in the sequel. The gas torque $M(\omega_p)$ can be expressed as function of the fuel-injection duration vector u as

$$M(\omega_p t) = \mathbf{a}_p^T \mathbf{u} \cos(\omega_p t) + \mathbf{b}_p^T \mathbf{u} \sin(\omega_p t), \qquad (5)$$

where $\mathbf{a}_p$ and $\mathbf{b}_p$ real and imaginary valued vectors which relates to the vectors of the phase-angle diagram of order $p$. By combination of (3) and (4) and regrouping the equations separately in their sine and cosine terms, we get

$$J_1 \omega_p^2 \Phi_{1,\cos} = C_1 \omega_p (\Phi_{1,\sin} - \Phi_{2,\sin}) + K_1 (\Phi_{1,\cos} - \Phi_{2,\cos}) + \mathbf{a}_p^T \mathbf{u} \qquad (6)$$

$$J_1 \omega_p^2 \Phi_{1,\sin} = C_1 \omega_p \left(- \Phi_{1,\cos} + \Phi_{2,\cos}\right) + K_1 \left(\Phi_{1,\sin} - \Phi_{2,\sin}\right) + \mathbf{b}_p^T \mathbf{u} , \quad (7)$$

The mass moment of inertia of the engine $J_1$ is a well known parameter and can be calculated from geometry and masses of the crank mechanisms and pistons. The Fourier series $\Phi_1$ and $\Phi_2$ can be determined by calculating the Fourier series of the measured angular speeds. For lower frequencies the crankshaft can normally be assumed rigid which implies that the vectors $\mathbf{a}_p$ and $\mathbf{b}_p$ are close to the nominal values. However, for higher vibratory frequencies they will begin to deviate.

Flexible coupling manufactures usually provide values for the stiffness and viscous damping of the coupling, where the nominal values of the coupling may vary up to 20 %. The effect these uncertainties have on the reconstructed torque orders depends on the system dynamics and the considered frequencies.

For engine-generator sets, the rotation of the load-side of the flexible coupling is mainly dependent of the rotational behaviour of the flywheel, which implies that $\Phi_1$ and $\Phi_2$ are linearly dependent and the parameters $K_1$, $C_1$, $\mathbf{a}_p$ and $\mathbf{b}_p$ cannot therefore be uniquely identified.

Suppose Eq. (6) and (7) can be described as the linear regression model

$$y = \boldsymbol{\theta}_p^T \mathbf{x} ,$$

where $y$ is the output, $\theta_p$ is the parameter vector for an order $p$ and $\mathbf{x}$ is the input vector or the regressor. On-line parameter identification can now be performed by using the least-mean squares method or recursively by using a recursive least-squares with exponential forgetting or a Kalman-filter to update the real and imaginary components separately

$$\hat{\boldsymbol{\theta}}_{p,\cos}(k) = \hat{\boldsymbol{\theta}}_{p,\cos}(k-1) + \mathbf{K}_p(k)\left(y_{p,real}(k) - \hat{\boldsymbol{\theta}}_{p,\cos}(k-1)^T \mathbf{x}(k)\right) \quad (8)$$

$$\hat{\boldsymbol{\theta}}_{p,\sin}(k) = \hat{\boldsymbol{\theta}}_{p,\sin}(k-1) + \mathbf{K}_p(k)\left(y_{p,imag}(k) - \hat{\boldsymbol{\theta}}_{p,\sin}(k-1)^T \mathbf{x}(k)\right) \quad (9)$$

The Kalman filter gain is given by

$$\mathbf{K}_p(k) = \frac{\mathbf{P}_p(k-1)\Delta\mathbf{u}(k)}{\mathbf{R}_p + \Delta\mathbf{u}(k)^T \mathbf{P}_p(k-1)\Delta\mathbf{u}(k)} \quad (10)$$

where the covariance matrix is given by

$$\mathbf{P}(k) = \mathbf{P}(k-1) - \frac{\mathbf{P}(k-1)\Delta\mathbf{u}(k)\Delta\mathbf{u}(k)^T \mathbf{P}(k-1)}{\mathbf{R} + \Delta\mathbf{u}(k)^T \mathbf{P}(k-1)\Delta\mathbf{u}(k)} + \mathbf{Q} , \quad (11)$$

where $\mathbf{R}_p$ is the measurement noise variance and $\mathbf{Q}_p$ is the covariance matrix of the process noise.

**Parameter estimation - Estimation of phase-angle diagrams**

Given that the dynamics of the flexible coupling is sufficiently well known, the phase-angle diagrams of the orders excited by the fuel combustions can be identified from measurements of angular speeds. The problem is hence to estimate the amplitudes and phases of the phase-angle diagrams of the considered set of orders. A linear regression model can now be arranged with the known output signal given by

$$y_{\cos}(n) = -J_1 \omega_p^2 \Phi_{1,\cos}(n) + C_1 \omega_p \left(\Phi_{1,\sin}(n) - \Phi_{2,\sin}(n)\right) + K_1 \left(\Phi_{1,\cos}(n) - \Phi_{2,\cos}(n)\right), \quad (12)$$

$$y_{\sin}(n) = -J_1\omega_p^2\Phi_{1,\sin}(n) + C_1\omega_p\left(-\Phi_{1,\cos}(n) + \Phi_{2,\cos}(n)\right) + K_1\left(\Phi_{1,\sin}(n) - \Phi_{2,\sin}(n)\right),\ (13)$$

and the regressors by

$$x_{\cos}(n) = \mathbf{a}_p^T\mathbf{u}(n)\ ,\tag{14}$$

$$x_{\sin}(n) = \mathbf{b}_p^T\mathbf{u}(n),\tag{15}$$

**Parameter estimation - Estimation of phase-angle diagrams and stiffnes of coupling**

In this section the objective is to estimate the phase-angle diagrams of a set of orders and the stiffness $K_1$ of the flexible coupling. The output signal can now be expressed as

$$y_{\cos}(n) = -J_1\omega_p^2\Phi_{1,\cos}(n) + C_1\omega_p\left(\Phi_{1,\sin}(n) - \Phi_{2,\sin}(n)\right),\tag{16}$$

$$y_{\sin}(n) = -J_1\omega_p^2\Phi_{1,\sin}(n) + C_1\omega_p\left(-\Phi_{1,\cos}(n) + \Phi_{2,\cos}(n)\right),\tag{17}$$

and the regressors as

$$\mathbf{x}_{\cos}(n) = \left[\mathbf{a}_p^T\mathbf{u}(n)\quad -\left(\Phi_{1,\cos}(n) - \Phi_{2,\cos}(n)\right)\right],\tag{18}$$

$$\mathbf{x}_{\sin}(n) = \left[\mathbf{b}_p^T\mathbf{u}(n)\quad -\left(\Phi_{1,\sin}(n) - \Phi_{2,\sin}(n)\right)\right].\tag{19}$$

Since no unique solution can be found for the regression model (16) - (19), more information must be added in order to increase the degree-of-freedom.

Recall the order-wise phase delays $\phi_p$ which rotate the phase-angle diagrams with respect to the TDC's. Assuming that the crankshaft is sufficiently rigid for a given torque order frequency and a perfect crankshaft model, the estimated phase-angle diagram will be rotated according to $\phi_p$. Given uncertainties in $K_1$ and $C_1$, the magnitudes and phases of the reconstructed gas-torque orders will be affected and will impose an addition rotation component to identified phase-angle diagram. Consequently, for lower torque-orders, the vector phases of the identified phase-angle diagrams can be fixed to nominal values, in order to increase the degrees-of-freedom. In addition, as only one degree of freedom is added, it must be assumed that the viscous damping of the flexible coupling can be calculated based on the estimated value of $K_1$ according to Eq. (3).

To enable identification of the phase-angle diagrams and the stiffness of the flexible coupling, it will be assumed that a) the phase delay $\phi_{1/2}$ is known and b) the relative damping factor $\kappa$ of the flexible coupling is sufficiently well known. In other words, the values of $\mathbf{a}_{1/2}$ and $\mathbf{b}_{1/2}$ can be determined as $\mathbf{a}_{1/2} = \mathbf{cos}(\mathbf{v}_{ign})$, $\mathbf{b}_{1/2} = \mathbf{sin}(\mathbf{v}_{ign})$ where $\mathbf{v}_{ign}$ is the ignition angle vector of the cylinders.

**Parameter estimation - Estimation of phase-angle diagrams and stiffnes**

**and viscous damping of coupling**

To estimate the viscous damping of the flexible coupling, an additional degree of freedom needs to be provided. This is achieved by further fixing the rotation of the phase-angle diagram of order 1 to $\phi_1$. The objectives are thus to estimate the phase-angle diagrams and the stiffness $K_1$, and damping $C_1$ of the flexible coupling. The output signal is now given by

$$y_{\cos}(n) = -J_1\omega_p^2\Phi_{1,\cos}(n),\tag{20}$$

$$y_{\sin}(n) = -J_1 \omega_p^2 \Phi_{1,\sin}(n), \tag{21}$$

and the regressors by

$$\mathbf{x}_{\cos}(n) = \left[\mathbf{a}_p^T \mathbf{u}(n) \quad -\omega_p\left(\Phi_{1,\sin}(n) - \Phi_{2,\sin}(n)\right) \quad -\left(\Phi_{1,\cos}(n) - \Phi_{2,\cos}(n)\right)\right], \tag{22}$$

$$\mathbf{x}_{\sin}(n) = \left[\mathbf{b}_p^T \mathbf{u}(n) \quad -\omega_p\left(-\Phi_{1,\cos}(n) + \Phi_{2,\cos}(n)\right) \quad -\left(\Phi_{1,\sin}(n) - \Phi_{2,\sin}(n)\right)\right], \tag{23}$$

where $\mathbf{a}_{1/2} = \cos(\mathbf{v}_{ign})$, $\mathbf{b}_{1/2} = \sin(\mathbf{v}_{ign})$, $\mathbf{a}_1 = \cos(\mathrm{mod}(\mathbf{v}_{ign}, 360))$ and $\mathbf{b}_1 = \sin(\mathrm{mod}(\mathbf{v}_{ign}, 360))$.

## Simulated and experimental results

In this section the suggested parameter estimation methods proposed in earlier are evaluated in simulations and full-scale engine experiments.

## Simulated examples

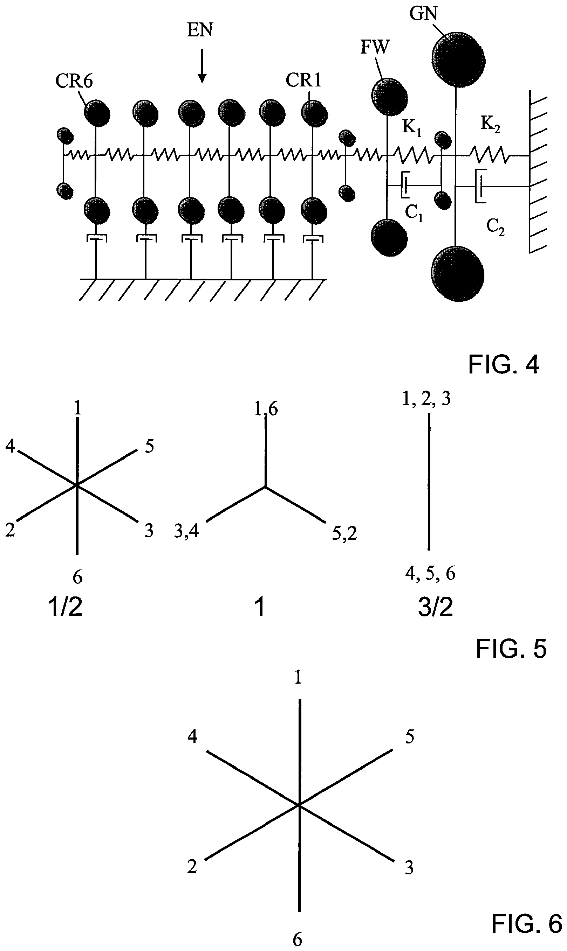

Simulation results are presented for a six-cylinder engine, which is modeled using a lumped-mass model comprising of eleven masses, cf. Fig. 4. In figure 4, EN denotes to engine, CR1 and CR6 denotes to a masses effecting on location of respective cylinders, FW denotes to flywheel and GN denotes to a generator. The simulations were done at 40 % engine load. The angular speed measurements were assumed to be subject to white noise having standard deviation equal to 4 % of the speed signal. For each iteration, a segment consisting of several revolutions (30 revolutions) was measured.
In the first simulation, the regression model presented in section - estimation of phase-angle diagrams, is used for identification of the phase-angle diagrams of the three lowest torque orders.
In Fig. 5 the identified phase-angle diagrams for orders 1/2, 1 and 3/2 are depicted after 36 iterations.
It can be observed that the identified phase-angle diagrams are similar to the nominal diagrams in Fig. 2. The average cylinder-wise angle discrepancies between the nominal and identified values are given in table 1, along with their standard deviation.

*Table 1. Estimated phase errors.*

| Variable | Mean phase difference [deg] | Standard deviation |
|----------|------------------------------|--------------------|
| Order 1/2 | -0.8 | 0.1 |
| Order 1 | 2.4 | 0.2 |
| Order 3/2 | -1.6 | 0.3 |

In the second simulation experiment, the regression model given in section 3.2 is evaluated. The intension is to identify the phase-angle diagram of order 1/2 and the stiffness $K_1$ of the flexible coupling. Following the discussion in section 3.2, this is enabled by assuming that the phase-angle diagram vectors are fixed to nominal values of $\phi_{1/2}$ with respect to the TDC's of the cylinders. It is implicitly understood that the amplitudes and phases of the phase-angle diagram vectors of higher orders can be estimated following section - estimation of phase-angle diagrams.
The identified phase-angle diagram of order 1/2 is shown for a simulation experiment is shown in Fig. 6. In contrast to the first simulation experiment, the parameters are here recursively identified using a Kalman filter to demonstrate the online properties of the method for detecting changes in $K_1$. In Fig. 6 the identified phase-angle diagram of order 1/2 is shown for a simulation experiment. It can be found that the identified phase-angle diagram corresponds to the nominal phase-angel diagram for order 1/2.

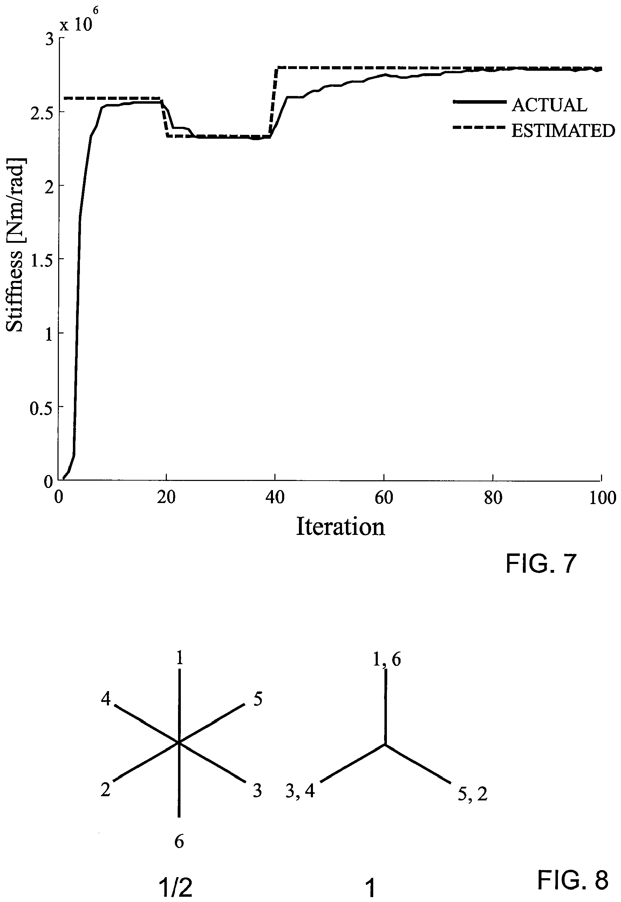

In Fig. 7 the actual value (solid line) and the development of the estimated value (dashed line) of $K_1$ are shown. During the simulation, step changes of -10 and + 20 % where done in the value of parameter $K_1$ at iterations 10 and 40, respectively. In Fig. 7 the actual and the development of the estimated value of $K_1$ are shown. It is seen that the estimated $Ki_1$ converge to the actual value and follows well the simulated changes in the coupling dynamics.
In Fig. 8 shows that the identified phase-angle diagrams are similar to the nominal diagrams.
In the third and final simulation experiment, the phase-angle diagrams of order 1/2 and 1, as well as the stiffness and damping of the flexible coupling are identified. In accordance with the discussion in section - estimation of phase-angle diagrams and the viscous damping of the coupling, the phases of the phase-angle diagrams of order 1/2 and 1 are fixed to nominal values. The least squares magnitudes estimates of the phase-angle diagrams presented in Fig. 8 shows that the identified phase-angle diagrams are similar to the nominal diagrams.

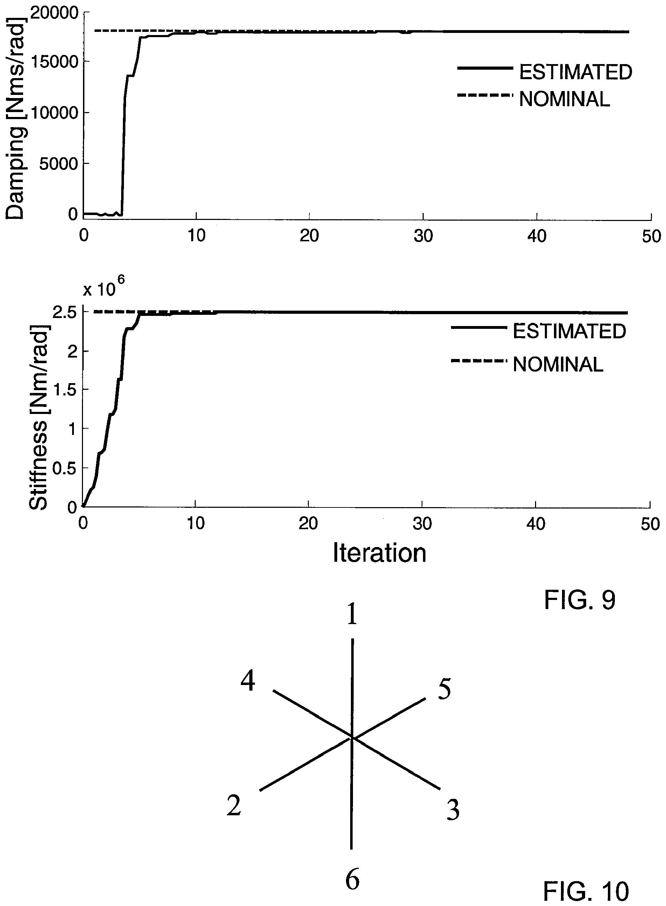

In Fig. 9 the development of the estimated values (solid lines) of $K_1$ and $C_1$ is presented and is compared to nominal values (dashed lines). The estimated values of the stiffness and damping of the coupling converges well to the actual values.

**Engine tests**

Engine tests In Fig. 10 the identified phase-angle diagram for order 1/2 is depicted for 50 % engine load.

In addition to simulations, full-scale engine evaluation experiments where performed on a six-cylinder common-rail engine. The engine was connected, via a flexible coupling, to a synchronous generator producing electricity to the Finnish national grid. An inductive pickup was used to measure the angular speed of the flywheel, whereas the angular speed of the generator was measured by means of an encoder, providing 360 pulses per revolution. These pulse trains were converted to voltage signals proportional to the angular deflection of each mass. The signals were sampled and recorded for 360 samples per revolution (approx. 3 kHz) by using a PC equipped with National Instrument data acquisition cards and DASYLab. Each iteration comprises of a 10 % change in the fuel-injection duration of one cylinder at a time and a subsequent measurement of the angular speeds for 30 work cycles.

In the first engine tests, the phase angle diagram of order 1/2 is identified using the dynamics provided by the manufacturer of the flexible coupling. In Fig. 10 the identified phase-angle diagram for order 1/2 is depicted for 50 % engine load. As can be seen, the symmetry of the phase-angle diagrams is corresponds to the nominal diagram.

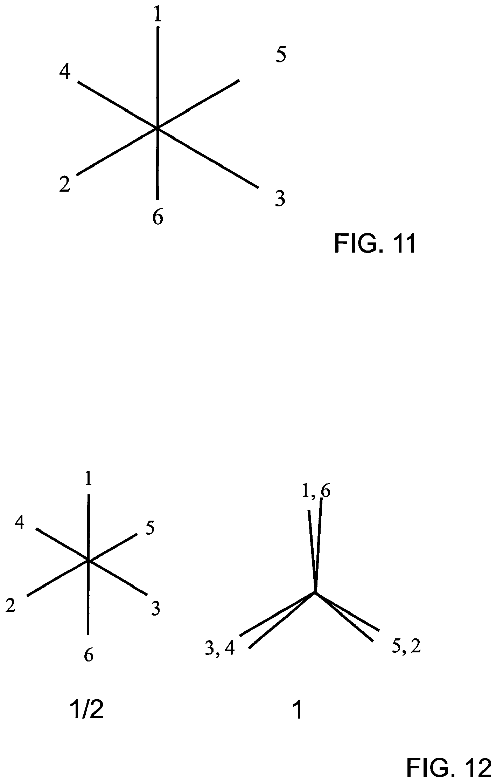

In Figs. 11A and 11B the identified phase-angle diagram of order 1/2 is shown after 36 iterations for 20 and 50 % engine load

Next, the vector magnitudes of the 1/2 order phase-angle diagram are identified along with the stiffness $K_1$ (cf. Eq. (1)) of the coupling, where the relative damping coefficient $\kappa$ is given by the manufacturer. In Figs. 11A - 11B, the identified phase-angle diagram of order 1/2 is shown after 36 iterations for 20 and 50 % engine load. The least squares estimate of the stiffness $K_1$ was identified for 50 % engine load.

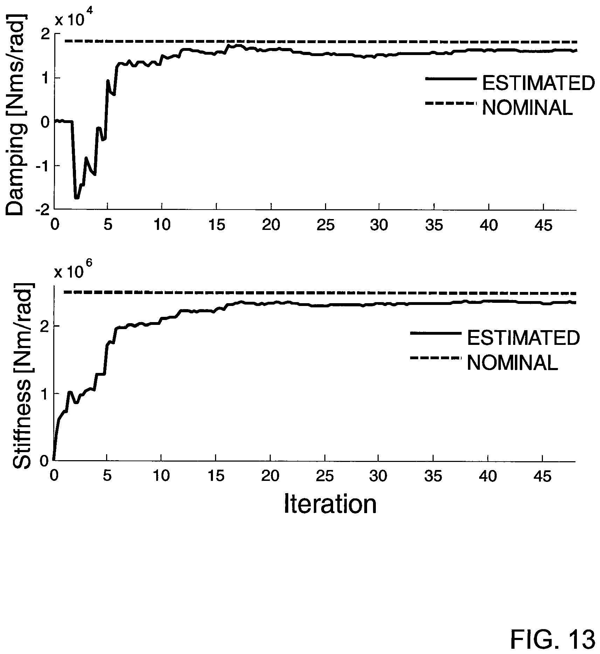

Finally, the vector magnitudes of the order 1/2 and 1 phase-angle diagrams are identified as well as the stiffness $K_1$ and damping $C_1$ of the coupling. The estimated magnitudes of the phase-angle diagrams of order 1/2 and 1 are shown in Fig. 12, whereas the development of the identified stiffness and damping are given in Fig. 13. Estimated values are presented with solid lines and nominal values with dashed lines.

The identified phase-angle diagrams are symmetric and comparable to the nominal phase-angle diagrams. It can, moreover, be seen that the estimated values converge quite well with a discrepancy of approximately 5 % from the nominal values, which is well within the accuracy.

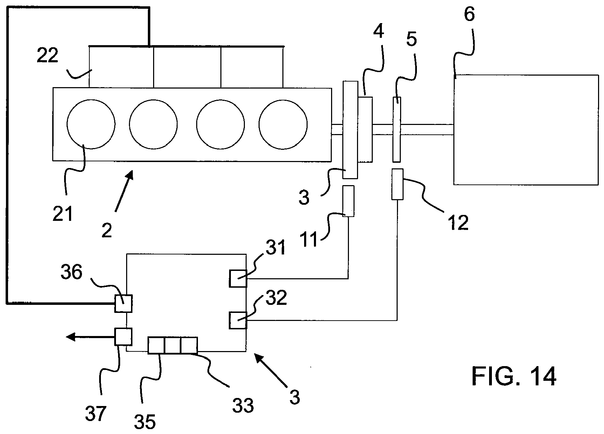

Figure 14 discloses exemplary system for executing the monitoring. Internal combustion engine 2 is connected to a load 6 via rotating system of the engine. Measuring means 11, 12, for example speed sensors, are located on each side of the coupling 4. Measuring means provide measurement data, which is suitable for determining angular speeds. Here, measuring means 11 is arranged to receive information, for example 360 pulses per revolution, from flywheel and other measuring means 12 arranged to receive information from a rotor 5 connected to a shaft.

Measurement data from measuring means 11, 12 is received in control device 3 with receiving means 31, 32.

Control device 3 is configured for monitoring purposes. Control device changes cylinder-wise 21 fuel-injection 22 of the internal combustion engine 2 with adjusting means 36 in order to effect to the dynamic of the transmission system connected to crankshaft.

Control device has identifier means 33 for identifying cylinder-wise effects from angular speed measurements, estimating means 34 for estimating dynamic flexibility parameter value of said coupling by analyzing said identified effects in combination with predetermined engine and transmission system parameters. The influence of each cylinder on each vibratory frequency of the crankshaft is determined by analysing the said identified influences in combination with the predetermined engine and transmission system parameters

Control device has indicating means 37 for indicating the condition of the coupling. Indicating may be a coupling failure alarm or notification if difference between the dynamic parameter value and predetermined reference value exceed a predetermined value.

It also possible revise current control devices to function according to monitoring functionality of the invention. Revising may be implemented to control device as a program, which provides this monitoring functionality.

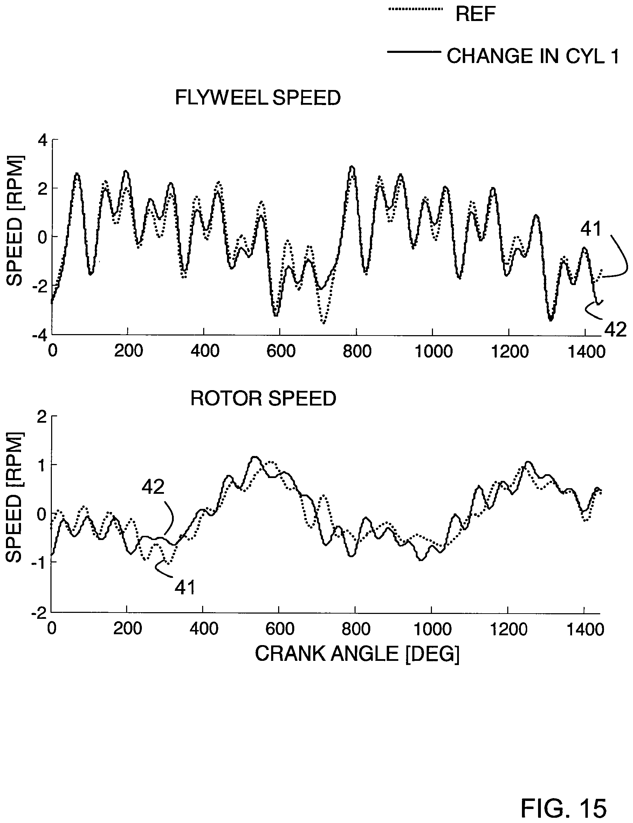

Figure 15 discloses example measuring results received from flywheel and from rotor. Both diagrams discloses differences between reference signal 41 (dashed line) and signal 42 relating to a change in cylinder one (solid line).

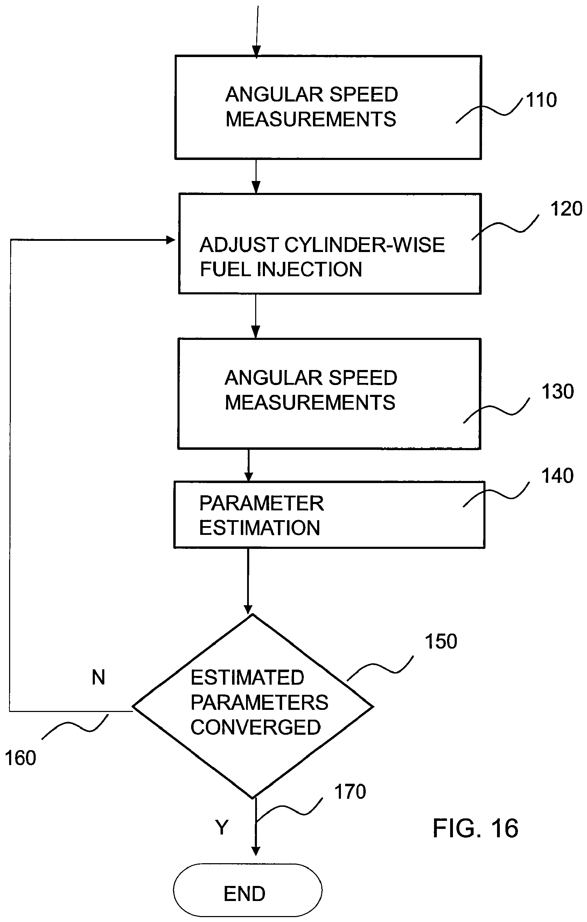

Figure 16 is a flowchart disclosing example of monitoring method. Angular speeds on each side of the coupling are measured and received in steps 110 and 130. Adjustment of cylinder-wise fuel-injection is executed in step 120. Parameter estimation based on the changes in oscillating behaviour is executed in step 140. Phase-angle diagrams of the engine may also be determined in step 140. Estimating the influence of each cylinder on each vibratory frequency of the crankshaft is executed by analysing identified influences in combination with the predetermined engine and transmission system parameters. In step 150, decides 170 if the estimated parameters has converged. Decision may be based after certain number of iterations 160.

Frequency-domain methods for identification of engine parameters have been developed and evaluated in simulations and full-scale engine tests on a six-cylinder 6 MW common-rail engine. By using small adjustments of the cylinder-wise fuel-injection durations, the dynamic of the crankshaft is excited sufficiently in order to estimate the phase-angles of the gas-torque orders and the dynamics of the flexible coupling. The methods are especially intended in context of monitoring of the fuel combustions and cylinder balancing.

The present invention may include any feature or combination of features disclosed herein either implicitly or explicitly or any generalisation thereof irrespective of whether it relates to the presently claimed invention. In view of the foregoing description it will be evident to a person skilled in the art that various modifications may be made within the scope of the invention.

## Claims

1. Monitoring method of coupling in a rotating system of an internal combustion engine, wherein angular speeds on each side of the coupling are measured (110, 130), comprising:

   - exciting dynamic property of the coupling by changing cylinder-wise fuel-injection of the internal combustion engine;
   - identifying cylinder-wise effects from angular speed measurements; and
   - estimating a stiffness value of said coupling by analyzing said identified effects in combination with predetermined engine and transmission system parameters

2. Method of claim 1, **characterised in that**, method comprising further steps of:

   - comparing said value to predetermined reference value; and
   - indicating state of the coupling based on difference between the value and predetermined reference value.

3. Method of claim 2, **characterised in that**, method steps of exciting, identifying, estimating and comparing are repeated.

4. Method according to claim 1 to 3, **characterised in that**, a viscous damping value of the coupling is also estimated.

5. Method according to any previous claim, **characterised in that** cylinder-wise fuel-injection change is compensated with change in fuel-injection into one or more other cylinders.

6. Monitoring system of coupling in a rotating system of an internal combustion engine, comprising

   - measuring means (11, 12) on each side of the coupling for measuring angular speed data, and
   - control unit (3) for receiving angular speed data, **characterised in that**, control unit (3) is configured to
   - excite dynamic property of the coupling (4) by changing cylinder-wise fuel-injection of the internal combustion engine;
   - identify cylinder-wise effects from angular speed data; and
   - estimate the stiffness value of said coupling by analyzing said identified effects in combination with predetermined engine and transmission system parameters

7. Monitoring system of claim 6, **characterised in that**, a viscous damping value of the coupling is also estimated.

8. Control unit for monitoring of coupling (4) in a rotating system of an internal combustion engine, comprising

   - receiving means (31, 32) for receiving angular speed data measured on each side of the coupling **characterised in that**, control unit further comprises:
   - adjusting means (36) arranged to change cylinder-wise (21) fuel-injection (22) of the internal combustion engine (2)
   - identifier means (33) identifying cylinder-wise effects from angular speed data;

- estimating means (34) estimating stiffness value of said coupling by analyzing said identified effects in combination with predetermined engine and transmission system parameters.

9. Control unit for monitoring of coupling (4) in a rotating system of an internal combustion engine according to claim 8, **characterised in that**, a viscous damping value of the coupling is also estimated.


**Patentansprüche**

1. Überwachungsverfahren einer Kupplung in einem rotierenden System eines Verbrennungsmotors, wobei auf jeder Seite der Kupplungsvorrichtung Winkelgeschwindigkeiten gemessen werden (110, 130), aufweisend:

   - Anregen einer dynamischen Eigenschaft der Kupplungsvorrichtung durch eine Änderung einer Kraftstoffinjektion einzelner Zylinder des Verbrennungsmotors;
   - Identifizieren von Wirkungen einzelner Zylinder anhand von Winkelgeschwindigkeitsmesswerten; und
   - Ermitteln eines Steifheitswerts der Kupplungsvorrichtung durch Analysieren der identifizierten Wirkungen in Verbindung mit vorbestimmten Motor- und Getriebesystemparametern.

2. Verfahren nach Anspruch 1, **dadurch gekennzeichnet, dass** das Verfahren ferner folgende Schritte umfasst:

   - Vergleichen des Wertes mit einem vorbestimmten Referenzwert; und
   - Anzeigen eines Zustands der Kupplungsvorrichtung auf der Grundlage einer Differenz zwischen dem Wert und einem vorbestimmten Referenzwert.

3. Verfahren nach Anspruch 2, **dadurch gekennzeichnet, dass** die Verfahrensschritte des Anregens, Identifizierens, Berechnens und Vergleichens wiederholt werden.

4. Verfahren nach Anspruch 1 bis 3, **dadurch gekennzeichnet, dass** außerdem ein Viskosedämpfungswert der Kupplungsvorrichtung berechnet wird.

5. Verfahren nach einem beliebigen der vorhergehenden Ansprüche, **dadurch gekennzeichnet, dass** die Kraftstoffinjektionsänderung einzelner Zylinder mittels einer Änderung der Kraftstoffinjektion in einen oder mehreren anderen Zylindern ausgeglichen wird.

6. Überwachungssystem einer Kuppelung in einem rotierenden System eines Verbrennungsmotors, aufweisend:

   - Messvorrichtungen (11, 12) auf jeder Seite der Kupplungsvorrichtung, um Winkelgeschwindigkeitsdaten zu messen, und
   - eine Regel-/Steuereinheit (3) zum Aufnehmen von Winkelgeschwindigkeitsdaten, **dadurch gekennzeichnet, dass** die Regel-/Steuereinheit (3) dazu eingerichtet ist,
   - eine dynamische Eigenschaft der Kupplungsvorrichtung (4) durch eine Änderung einer Kraftstoffinjektion einzelner Zylinder des Verbrennungsmotors anzuregen;
   - Wirkungen anhand von Winkelgeschwindigkeitsdaten einzelner Zylinder zu identifizieren; und
   - den Steifheitswert der Kupplungsvorrichtung durch Analysieren der identifizierten Wirkungen in Verbindung mit vorbestimmten Motor- und Getriebesystemparametern zu berechnen.

7. Überwachungssystem nach Anspruch 6, **dadurch gekennzeichnet, dass** außerdem ein Viskosedämpfungswert der Kupplungsvorrichtung berechnet wird.

8. Regel-/Steuereinheit zur Überwachung einer Kupplungsvorrichtung (4) in einem rotierenden System eines Verbrennungsmotors, aufweisend:

   - Aufnahmemittel (31, 32) zum Aufnehmen von Winkelgeschwindigkeitsdaten, die auf jeder Seite der Kupplungsvorrichtung gemessen werden, **dadurch gekennzeichnet, dass** die Regel-/Steuereinheit ferner enthält:
   - Einstellmittel (36), die dafür ausgelegt sind, eine Kraftstoffinjektion (22) des Verbrennungsmotors (2) einzelner Zylinder (21) zu ändern;
   - Identifizierungsmittel (33), die Wirkungen einzelner Zylinder anhand von Winkelgeschwindigkeitsdaten identifizieren;

- Berechnungsmittel (34), die einen Steifheitswert der Kupplungsvorrichtung durch Analysieren der identifizierten Wirkungen in Verbindung mit vorbestimmten Motor- und Getriebesystemparametern berechnen.

9. Regel-/Steuereinheit zur Überwachung einer Kupplungsvorrichtung (4) in einem rotierenden System eines Verbrennungsmotors nach Anspruch 8, **dadurch gekennzeichnet, dass** außerdem ein Viskosedämpfungswert der Kupplungsvorrichtung berechnet wird.

**Revendications**

1. Procédé de surveillance d'un accouplement dans un système rotatif de moteur à combustion interne, dans lequel des vitesses angulaires de chaque coté de l'accouplement sont mesurées (110, 130), comprenant :

   - l'excitation d'une propriété dynamique de l'accouplement en changeant l'injection de combustible par cylindre du moteur à combustion interne ;
   - l'identification d'effets par cylindre à partir de mesures de vitesse angulaire ; et
   - l'estimation d'une valeur de rigidité dudit accouplement en analysant lesdits effets identifiés en combinaison avec des paramètres de système de transmission et de moteur prédéterminés.

2. Procédé selon la revendication 1, **caractérisé en ce que** le procédé comprend les étapes additionnelles suivantes :

   - comparaison de ladite valeur à une valeur de référence prédéterminée ; et
   - indication de l'état de l'accouplement sur base d'une différence entre ladite valeur et la valeur de référence prédéterminée.

3. Procédé selon la revendication 2, **caractérisé en ce que** les étapes de procédé d'excitation, d'identification, d'estimation et de comparaison sont répétées.

4. Procédé selon les revendications 1 à 3, **caractérisé en ce qu'**une valeur d'amortissement visqueux de l'accouplement est également estimée.

5. Procédé selon l'une quelconque des revendications antérieures, **caractérisé en ce que** le changement de l'injection de combustible par cylindre est compensé par un changement de l'injection de combustible dans un ou plusieurs autres cylindres.

6. Système de surveillance d'un accouplement dans un système rotatif de moteur à combustion interne, comprenant :

   - un moyen de mesure (11, 12) de chaque coté de l'accouplement pour mesurer des données de vitesse angulaire, et
   - une unité de contrôle (3) pour recevoir des données de vitesse angulaire, **caractérisé en ce que** l'unité de contrôle (3) est configurée pour
   - exciter une propriété dynamique de l'accouplement (4) en changeant l'injection de combustible par cylindre du moteur à combustion interne ;
   - identifier des effets par cylindre à partir de données de vitesse angulaire ; et
   - estimer la valeur de rigidité dudit accouplement en analysant lesdits effets identifiés en combinaison avec des paramètres de système de transmission et de moteur prédéterminés.

7. Système de surveillance selon la revendication 6, **caractérisé en ce qu'**une valeur d'amortissement visqueux de l'accouplement est également estimée.

8. Unité de contrôle pour surveiller un accouplement (4) dans un système rotatif de moteur à combustion interne, comprenant :

   - un moyen de réception (31, 32) pour recevoir des données de vitesse angulaire mesurées de chaque coté de l'accouplement, **caractérisée en ce que** l'unité de contrôle comprend en outre :
   - un moyen d'ajustement (36) agencé pour changer une injection de combustible (22) par cylindre (21) du moteur à combustion interne (2) ;
   - un moyen d'identification (33) identifiant des effets par cylindre à partir de données de vitesse angulaire ;

- un moyen d'estimation (34) estimant une valeur de rigidité dudit accouplement en analysant lesdits effets identifiés en combinaison avec des paramètres de système de transmission et de moteur prédéterminés.

9. Unité de contrôle pour surveiller un accouplement (4) dans un système rotatif de moteur à combustion interne selon la revendication 8, **caractérisée en ce qu'**une valeur d'amortissement visqueux de l'accouplement est également estimée.

FIG. 1

FIG. 2

CRANK ANGLE [DEG]

FIG. 3

FIG. 4

1/2          1          3/2

FIG. 5

FIG. 6

FIG. 7

1/2       1       FIG. 8

FIG. 9

FIG. 10

FIG. 11

FIG. 12

FIG. 13

FIG. 14

FIG. 15

ANGULAR SPEED
MEASUREMENTS — 110

ADJUST CYLINDER-WISE
FUEL INJECTION — 120

ANGULAR SPEED
MEASUREMENTS — 130

PARAMETER
ESTIMATION — 140

ESTIMATED
PARAMETERS
CONVERGED — 150

N

160

170

Y

END

FIG. 16

**EP 2 411 649 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20080040021 A